# EUROPEAN PATENT APPLICATION

(11) **EP 4 576 303 A1**
(43) Date of publication of application: **25.06.2025**
(21) Application number: 24222214.9
(22) Date of filing: 20.12.2024
(51) Int. Cl.: H01M 10/0566

(54) **SECONDARY BATTERY AND ELECTRONIC APPARATUS**

(30) Priority: 22.12.2023 CN 202311787117
(71) Applicant: NINGDE AMPEREX TECHNOLOGY LIMITED, Ningde City, Fujian Province 352100 (CN)
(72) Inventor: ZHANG, Lilan, Ningde City, Fujian Province 352100 (CN); PENG, Xiexue, Ningde City, Fujian Province 352100 (CN); FAN, Xiaohe, Ningde City, Fujian Province 352100 (CN); TANG, Chao, Ningde City, Fujian Province 352100 (CN)
(74) Representative: Icosa

(57) **Abstract**

A secondary battery includes a positive electrode, a negative electrode, a separator, and an electrolyte. The electrolyte includes a compound A represented by the following formula: 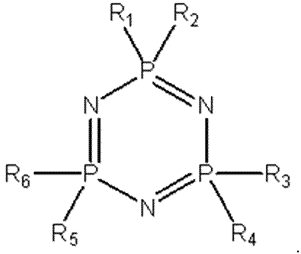 R₁ to R₆ are each independently selected from a fluorine atom, a cyano group, a sulfo group, an aldehyde group, a substituted or unsubstituted C₁-C₆ alkoxy group, a substituted or unsubstituted C₁-C₆ alkyl group, a substituted or unsubstituted C₂-C₆ alkenyl group, a substituted or unsubstituted C₂-C₆ alkynyl group, a substituted or unsubstituted C₆-C₁₂ aryl group, and a substituted or unsubstituted C₆-C₁₂ aryloxy group. During substitution, substituents of the groups are each independently selected from a fluorine atom, a C₁-C₃ alkyl group, or a C₂-C₄ alkenyl group. A mass percentage of the compound A is 20% to 82% based on a mass of the electrolyte. The separator includes a base film and a porous coating provided on at least one surface of the base film, and a contact angle between the electrolyte and the surface of the porous coating of the separator is 0° to 36°.

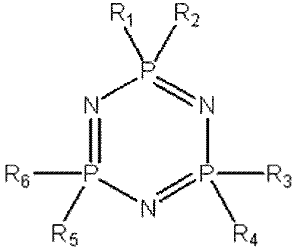

## Description

### TECHNICAL FIELD

This application relates to the field of electrochemical technologies, and in particular, to a secondary battery and an electronic apparatus.

### BACKGROUND

Secondary batteries such as lithium-ion batteries have the characteristics of large specific energy, high working voltage, low self-discharge rate, small volume, light weight, and the like. Therefore, they have been maturely used in small-capacity battery markets like consumer electronics and electric tools, and have shown great application value in fields requiring large-capacity energy storage devices, for example, the fields of electric vehicles, energy storage, communications, national defense, and aerospace.

However, since the birth of lithium-ion batteries, safety has always been an important issue limiting their use scenarios. Especially when a battery is charged in a low-temperature environment, lithium precipitation is likely to occur on the surface of a negative electrode plate. As an active metal, lithium is likely to react with an electrolyte after precipitation, leading to the risk of battery swelling and burning.

### SUMMARY

This application is intended to provide a secondary battery and an electronic apparatus, so as to improve the low-temperature lithium precipitation performance of the secondary battery. Specific technical solutions are as follows.

It should be noted that in the content of this application, an example in which a lithium-ion battery is used as a secondary battery is used to illustrate this application. However, the secondary battery of this application is not limited to the lithium-ion battery.

According to a first aspect, this application provides a secondary battery including a positive electrode, a negative electrode, a separator, and an electrolyte, where the electrolyte includes a compound A represented by the following formula: 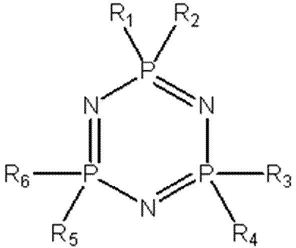
where R₁ to R₆ are each independently selected from a fluorine atom, a cyano group, a sulfo group, an aldehyde group, a substituted or unsubstituted C₁-C₆ alkoxy group, a substituted or unsubstituted C₁-C₆ alkyl group, a substituted or unsubstituted C₂-C₆ alkenyl group, a substituted or unsubstituted C₂-C₆ alkynyl group, a substituted or unsubstituted C₆-C₁₂ aryl group, and a substituted or unsubstituted C₆-C₁₂ aryloxy group;
during substitution, substituents of the groups are each independently selected from a fluorine atom, a C₁-C₃ alkyl group, or a C₂-C₄ alkenyl group, and a mass percentage a of the compound A is 20% to 82% based on a mass of the electrolyte preferably 30% to 75%, further preferably 35% to 65%; and the separator includes a base film and a porous coating provided on at least one surface of the base film, and a contact angle between the electrolyte and the surface of the porous coating of the separator is 0° to 36°. In this application, adding the compound A into the electrolyte and adjusting the mass percentage a of the compound A to be within the above ranges can effectively dilute a base electrolyte and increase a transport speed of lithium ions in the electrolyte, thereby improving the kinetic performance of the secondary battery and reducing lithium precipitation during low-temperature charging of the secondary battery. In addition, when the contact angle between the electrolyte and the surface of the porous coating of the separator is within the above range, the electrolyte has a good infiltration effect on the separator, facilitating transport of the electrolyte. Thus, the secondary battery has good low-temperature lithium precipitation performance.

In an embodiment of this application, the compound A is at least one selected from the following compounds:

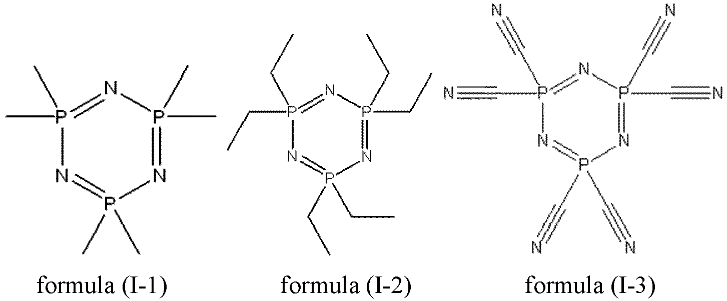

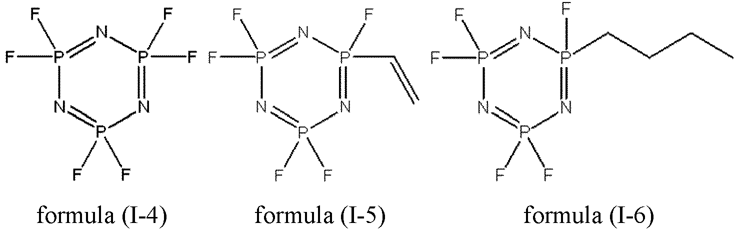

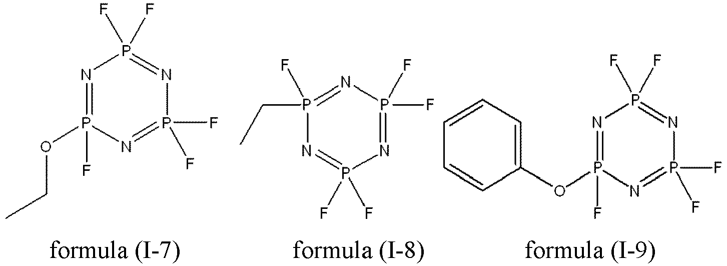

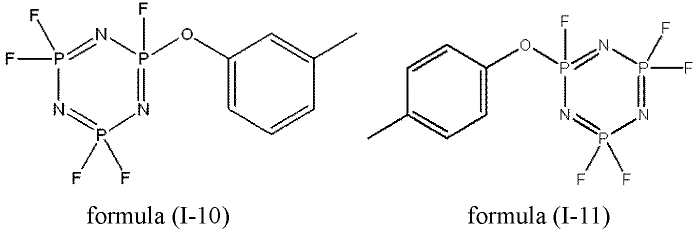

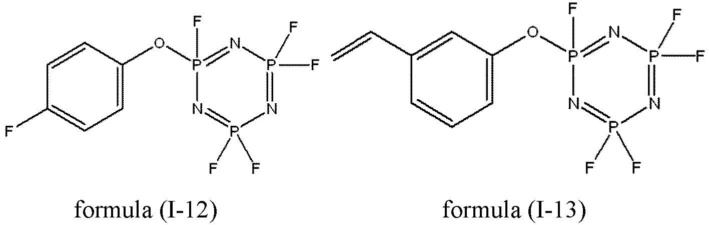

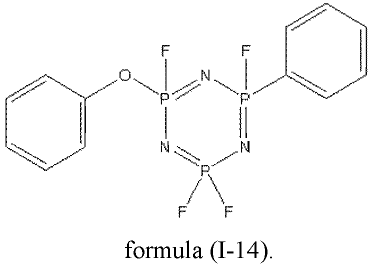

Adding the above types of compounds A into the electrolyte can effectively dilute the base electrolyte and increase the transport speed of lithium ions in the electrolyte, thereby improving the kinetic performance of the secondary battery and improving the low-temperature lithium precipitation performance of the secondary battery.

In an embodiment of this application, the electrolyte includes a compound B; the compound B includes at least one of a C₂-C₁₂ carboxylate or a C₃-C₉ carbonate; and a mass percentage b of the compound B is 9% to 40% based on the mass of the electrolyte. Adding the compound B into the electrolyte and adjusting the mass percentage b of the compound B to be within the above range allows the electrolyte to have a good lithium salt dissociation ability and also facilitates rapid transport of lithium ions between the positive and negative electrodes. Thus, the secondary battery has good cycling performance.

In an embodiment of this application, the electrolyte includes a compound B; the compound B includes a C₂-C₁₂ carboxylate; and the carboxylate includes at least one of methyl formate, methyl acetate, ethyl acetate, n-propyl acetate, tert-butyl acetate, methyl propionate, ethyl propionate, propyl propionate, γ-butyrolactone, decalactone, valerolactone, caprolactone, difluoroethyl acetate, ethyl difluoroacetate, monofluoroethyl acetate, ethyl monofluoracetate, trifluoroethyl acetate, ethyl trifluoroacetate, difluoropropyl acetate, or propyl difluoroacetate. In an embodiment of this application, the electrolyte includes a compound B; the compound B includes a C₃-C₉ carbonate; and the carbonate includes at least one of dimethyl carbonate, diethyl carbonate, dipropyl carbonate, methyl propyl carbonate, ethyl propyl carbonate, methyl ethyl carbonate, ethylene carbonate, propylene carbonate, butylene carbonate, vinylene carbonate, methyl ethyl trifluoromethyl carbonate, or diethyl trifluoromethyl carbonate. Selecting the above types of compounds B and adding them into the electrolyte allows the electrolyte to have a good lithium salt dissociation ability and also facilitates rapid transport of lithium ions between the positive and negative electrodes. Thus, the secondary battery has good cycling performance.

In an embodiment of this application, a coating weight x of the porous coating is 0.2 mg/5000mm² to 6 mg/5000mm². In this application, adjusting the coating weight x of the porous coating to be within the above range helps to ensure an adhesion force between the separator and the positive and negative electrodes such that a lithium ion transport path between interfaces is unobstructed, thereby helping to improve the transport of lithium ions, improving the kinetic performance of the secondary battery, and also achieving a high energy density. Thus, the secondary battery has good low-temperature lithium precipitation performance and high energy density.

In an embodiment of this application, the porous coating includes primary particles, and a swelling degree of the primary particles in the electrolyte is 50% to 200%. Adjusting the swelling degree of the primary particles in the electrolyte to be within the above range helps to ensure good air permeability of the separator and good adhesion between the separator and the positive and negative electrodes, thereby improving the kinetic performance and cycling performance of the lithium-ion battery.

In an embodiment of this application, the primary particles are formed by polymerization monomers; the polymerization monomers include at least one of butadiene, methyl acrylate, methyl methacrylate, styrene, butyl methacrylate, isooctyl acrylate, isobutyl acrylate, ethylene, propylene, or vinylidene fluoride; and a mass percentage of the primary particles is 80% to 100% based on a mass of the porous coating. Selecting the above types of polymerization monomers for polymerization to obtain the primary particles and adjusting the mass percentage of the primary particles to be within the above range helps to ensure the affinity between the porous coating of the separator and the electrolyte, making the porous coating have a suitable swelling degree and good air permeability, thereby improving the kinetic performance and cycling performance of the lithium-ion battery.

In an embodiment of this application, the electrolyte includes a lithium salt; the lithium salt includes at least one of lithium bis(fluorosulfonyl)imide, lithium bis(trifluoromethanesulfonyl)imide, lithium hexafluorophosphate, lithium tetrafluoroborate, lithium dioxalate borate, lithium bis(fluoromalonato)borate, or lithium trifluoromethyl sulfonate; and a mass percentage c of the lithium salt is 10% to 40% based on the mass of the electrolyte, preferably 12% to 35%. Selecting the above types of lithium salts and adjusting the mass percentage c of the lithium salt to be within the above ranges allows for a high solubility of the lithium salt, provides conductive ions and also facilitates formation of a stable SEI film on a surface of the negative electrode plate. Thus, the secondary battery has good cycling performance.

In an embodiment of this application, the electrolyte further includes a compound C; the compound C includes at least one of difluoropyridine, fluoroethylene carbonate, vinylene carbonate, triphenyl phosphate, lithium difluorophosphate, succinonitrile, adiponitrile, 1,3,6-hexanetricarbonitrile, ethylene sulfate, propylene sulfate, or butylene sulfate; and a mass percentage d of the compound C is 0.1% to 10% based on the mass of the electrolyte, preferably 1% to 8%. Selecting the above types of compounds C and adjusting the mass percentage d of the compound C to be within the above ranges facilitates formation of a more stable SEI film on the surface of the negative electrode, reduces a consumption rate of the electrolyte, and improves the kinetic performance of the secondary battery, thereby ensuring that the secondary battery has good low-temperature lithium precipitation performance and cycling performance.

According to a second aspect, this application provides an electronic apparatus including the secondary battery according to any one of the foregoing embodiments. The secondary battery provided in this application has good low-temperature lithium precipitation performance. Therefore, the electronic apparatus of this application has long service life.

This application has the following beneficial effects.

This application provides a secondary battery and an electronic apparatus. The secondary battery includes a positive electrode, a negative electrode, a separator, and an electrolyte, where the electrolyte includes a compound A represented by the following formula: 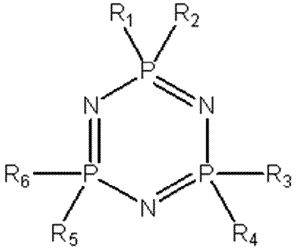 where R₁ to R₆ are each independently selected from a fluorine atom, a cyano group, a sulfo group, an aldehyde group, a substituted or unsubstituted C₁-C₆ alkoxy group, a substituted or unsubstituted C₁-C₆ alkyl group, a substituted or unsubstituted C₂-C₆ alkenyl group, a substituted or unsubstituted C₂-C₆ alkynyl group, a substituted or unsubstituted C₆-C₁₂ aryl group, and a substituted or unsubstituted C₆-C₁₂ aryloxy group; and during substitution, substituents of the groups are each independently selected from a fluorine atom, a C₁-C₃ alkyl group, or a C₂-C₄ alkenyl group. A mass percentage a of the compound A is 20% to 82% based on a mass of the electrolyte. The separator includes a base film and a porous coating provided on at least one surface of the base film, and a contact angle between the electrolyte and the surface of the porous coating of the separator is 0° to 36°. Adding the compound A of which the percentage is within the ranges in this application into the electrolyte can dilute a base electrolyte and increase a transport speed of lithium ions in the electrolyte, thereby improving the kinetic performance of the secondary battery and reducing lithium precipitation during low-temperature charging of the secondary battery. When the contact angle between the electrolyte and the surface of the porous coating of the separator is within the range in this application, the electrolyte has a good infiltration effect on the separator, facilitating transport of the electrolyte. Through such configuration, the secondary battery obtained has good low-temperature lithium precipitation performance.

Certainly, when any product or method of this application is implemented, all advantages described above are not necessarily demonstrated simultaneously.

### DETAILED DESCRIPTION

The following clearly and completely describes the technical solutions in some embodiments of this application. Apparently, the described embodiments are only some but not all of the embodiments of this application. All other embodiments obtained by persons skilled in the art based on this application shall fall within the protection scope of this application.

It should be noted that in the content of this application, an example in which a lithium-ion battery is used as a secondary battery is used to illustrate this application. However, the secondary battery of this application is not limited to the lithium-ion battery.

According to a first aspect, this application provides a secondary battery including a positive electrode, a negative electrode, a separator, and an electrolyte, where the electrolyte includes a compound A represented by the following formula: 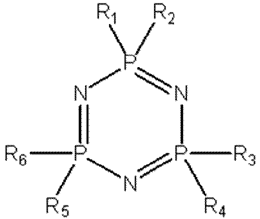 where R₁ to R₆ are each independently selected from a fluorine atom, a cyano group, a sulfo group, an aldehyde group, a substituted or unsubstituted C₁-C₆ alkoxy group, a substituted or unsubstituted C₁-C₆ alkyl group, a substituted or unsubstituted C₂-C₆ alkenyl group, a substituted or unsubstituted C₂-C₆ alkynyl group, a substituted or unsubstituted C₆-C₁₂ aryl group, and a substituted or unsubstituted C₆-C₁₂ aryloxy group. During substitution, substituents of the groups are each independently selected from a fluorine atom, a C₁-C₃ alkyl group, or a C₂-C₄ alkenyl group, and a mass percentage a of the compound A is 20% to 82% based on a mass of the electrolyte, preferably 30% to 75%, further preferably 35% to 65%. For example, the mass percentage a of the compound A is 20%, 23%, 27%, 30%, 33%, 35%, 38%, 40%, 43%, 45%, 48%, 50%, 54%, 57%, 60%, 62%, 65%, 67%, 70%, 75%, 78%, 80%, 82%, or a range defined by any two of these values. The separator includes a base film and a porous coating provided on at least one surface of the base film, and a contact angle between the electrolyte and the surface of the porous coating of the separator is 0° to 36°. For example, the contact angle between the electrolyte and the surface of the porous coating of the separator is 0°, 3°, 7°, 10°, 13°, 17°, 20°, 23°, 27°, 30°, 33°, 36°, or a range defined by any two of these values. An excessively low mass percentage of the compound A in the electrolyte results in an unsatisfactory dilution effect on the base electrolyte, a failure in significantly increasing the transport speed of lithium ions in the electrolyte, and a failure in significantly improving the kinetic performance of the secondary battery. An excessively high mass percentage of the compound A in the electrolyte results in a failure in further improving the dilution effect on the base electrolyte. In addition, since the compound A cannot dissociate lithium salts, an excessively high mass percentage of the compound A hinders the transport of lithium ions in the electrolyte, thereby affecting the low-temperature lithium precipitation performance of the secondary battery. An excessively large contact angle between the electrolyte and the surface of the porous coating of the separator results in a poor infiltration effect of the electrolyte on the separator, affecting the transport of the electrolyte, thereby causing low-temperature lithium precipitation of the secondary battery. In this application, adding the compound A into the electrolyte and adjusting the mass percentage a of the compound A to be within the above ranges can effectively dilute a base electrolyte and increase a transport speed of lithium ions in the electrolyte, thereby improving the kinetic performance of the secondary battery and reducing lithium precipitation during low-temperature charging of the secondary battery. In addition, when the contact angle between the electrolyte and the surface of the porous coating of the separator is within the above range, the electrolyte has a good infiltration effect on the separator, facilitating transport of the electrolyte. Thus, the secondary battery has good low-temperature lithium precipitation performance. In this application, in a test of the contact angle between the electrolyte and the surface of the porous coating of the separator, the electrolyte includes ethylene carbonate, diethyl carbonate, and lithium hexafluorophosphate, where based on the mass of the electrolyte, a mass percentage of the ethylene carbonate is 26.25%, a mass percentage of the diethyl carbonate is 61.25%, and a mass percentage of the lithium hexafluorophosphate is 12.5%. In this application, the contact angle between the electrolyte and the surface of the porous coating of the separator can be adjusted by adjusting parameters such as the composition of the electrolyte, the coating weight of the porous coating of the separator, and the composition of the primary particles in the porous coating of the separator.

In an embodiment of this application, R₁ to R₆ are each independently selected from a fluorine atom, a cyano group, a sulfo group, a formyl group, an acetyl group, a methyl group, an ethyl group, a propyl group, a butyl group, a vinyl group, a propenyl group, a butenyl group, an ethynyl group, a propargyl group, a butynyl group, a phenyl group, a naphthyl group, an ethoxy group, a phenoxy group, or a naphthoxy group. Adding the compound A with a group within the foregoing range into the electrolyte can effectively dilute the base electrolyte and increase a transport speed of lithium ions in the electrolyte, thereby improving the kinetic performance of the secondary battery and reducing the lithium precipitation during low-temperature charging of the secondary battery. Thus, the low-temperature lithium precipitation performance of the secondary battery is improved.

In an embodiment of this application, the compound A is at least one selected from the following compounds:

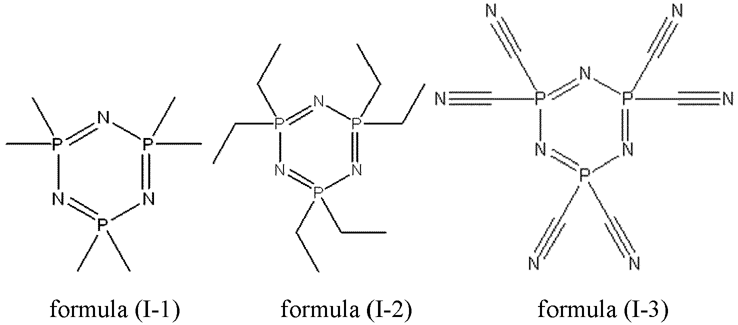

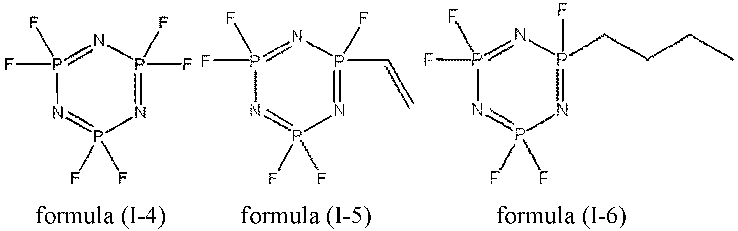

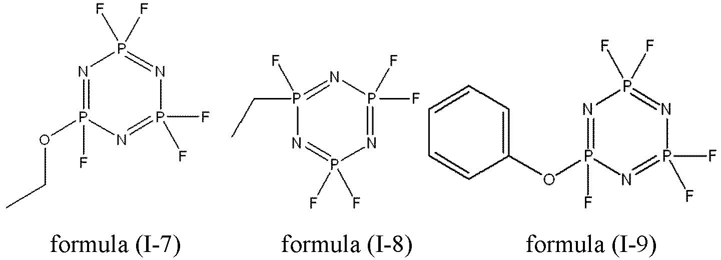

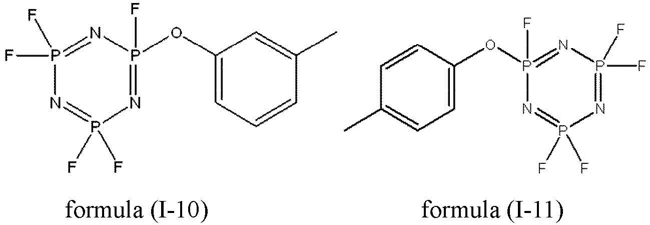

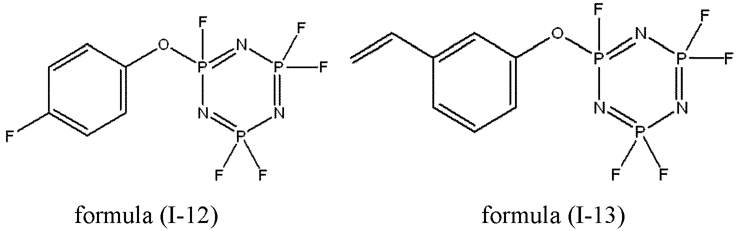

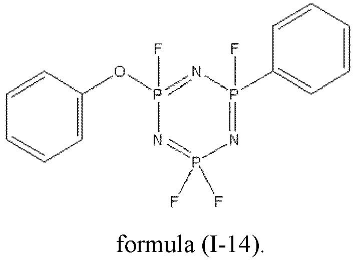

Adding the above types of compounds A into the electrolyte can effectively dilute the base electrolyte and increase the transport speed of lithium ions in the electrolyte, thereby improving the kinetic performance of the secondary battery and reducing the lithium precipitation during low-temperature charging of the secondary battery. Thus, the low-temperature lithium precipitation performance of the secondary battery is improved.

In an embodiment of this application, the electrolyte includes a compound B; the compound B includes at least one of a C₂-C₁₂ carboxylate or a C₃-C₉ carbonate; and a mass percentage b of the compound B is 9% to 40% based on the mass of the electrolyte. For example, the mass percentage b of the compound B is 9%, 10%, 13%, 18%, 20%, 23%, 27%, 30%, 33%, 38%, 40%, or a range defined by any two of these values. Adding the compound B into the electrolyte and adjusting the mass percentage b of the compound B to be within the above range allows the electrolyte to have a good lithium salt dissociation ability and also facilitates rapid transport of lithium ions between the positive and negative electrodes. Thus, the secondary battery has good cycling performance.

In an embodiment of this application, the electrolyte includes a compound B; the compound B includes a C₂-C₁₂ carboxylate; and the carboxylate includes at least one of methyl formate, methyl acetate, ethyl acetate, n-propyl acetate, tert-butyl acetate, methyl propionate, ethyl propionate, propyl propionate, γ-butyrolactone, decalactone, valerolactone, caprolactone, difluoroethyl acetate, ethyl difluoroacetate, monofluoroethyl acetate, ethyl monofluoracetate, trifluoroethyl acetate, ethyl trifluoroacetate, difluoropropyl acetate, or propyl difluoroacetate. Selecting the above types of compounds B and adding them into the electrolyte allows the electrolyte to have a good lithium salt dissociation ability and also facilitates rapid transport of lithium ions between the positive and negative electrodes. Thus, the secondary battery has good cycling performance. The mass percentage b of the compound B is 9% to 40% based on the mass of the electrolyte. For example, the mass percentage b of the compound B is 9%, 10%, 13%, 18%, 20%, 23%, 27%, 30%, 33%, 38%, 40%, or a range defined by any two of these values.

In an embodiment of this application, the electrolyte includes a compound B; the compound B includes a C₃-C₉ carbonate; and the carbonate includes at least one of dimethyl carbonate, diethyl carbonate, dipropyl carbonate, methyl propyl carbonate, ethyl propyl carbonate, methyl ethyl carbonate, ethylene carbonate, propylene carbonate, butylene carbonate, vinylene carbonate, methyl ethyl trifluoromethyl carbonate, or diethyl trifluoromethyl carbonate. Selecting the above types of compounds B and adding them into the electrolyte allows the electrolyte to have a good lithium salt dissociation ability and also facilitates rapid transport of lithium ions between the positive and negative electrodes. Thus, the secondary battery has good cycling performance. The mass percentage b of the compound B is 9% to 40% based on the mass of the electrolyte. For example, the mass percentage b of the compound B is 9%, 10%, 13%, 18%, 20%, 23%, 27%, 30%, 33%, 38%, 40%, or a range defined by any two of these values.

In an embodiment of this application, the electrolyte includes a compound B, and the compound B includes a carbonate and a carboxylate. Proportions of the carboxylate and the carbonate in the compound B are not particularly limited in this application, provided that the objective of this application can be achieved.

In an embodiment of this application, a coating weight x of the porous coating is 0.2 mg/5000mm² to 6 mg/5000mm². For example, the coating weight x of the porous coating is 0.2 mg/5000mm², 0.8 mg/5000mm², 1 mg/5000mm², 1.6 mg/5000mm², 2 mg/5000mm², 2.4 mg/5000mm², 3 mg/5000mm², 3.7 mg/5000mm², 4 mg/5000mm², 4.4 mg/5000mm², 5 mg/5000mm², 5.6 mg/5000mm², 6 mg/5000mm², or a range defined by any two of these values. In this application, adjusting the coating weight x of the porous coating to be within the above range helps to ensure an adhesion force between the separator and the positive and negative electrodes such that a lithium ion transport path between interfaces is unobstructed, thereby helping to shorten the lithium ion transport path, improving the transport of lithium ions, improving the kinetic performance of the secondary battery, and also achieving a high energy density. Thus, the secondary battery has good low-temperature lithium precipitation performance and high energy density. In this application, the coating weight of the porous coating can be adjusted by means known to persons skilled in the art. For example, when a porous coating slurry is applied onto a base film, the coating weight of the porous coating is increased by increasing a coating amount of the porous coating slurry based on a specified solid content of the porous coating slurry. This is not particularly limited in this application, provided that the objective of this application can be achieved.

In an embodiment of this application, the porous coating includes primary particles, and a swelling degree of the primary particles in the electrolyte is 50% to 200%. For example, the swelling degree of the primary particles in the electrolyte is 50%, 70%, 90%, 100%, 130%, 150%, 180%, 200%, or a range defined by any two of these values. Adjusting the swelling degree of the primary particles in the electrolyte to be within the above range ensures good air permeability of the separator and good adhesion between the separator and the positive and negative electrodes, thereby improving the kinetic performance and cycling performance of the lithium-ion battery.

A method for adjusting the swelling degree of the primary particles in the electrolyte is not particularly limited in this application. For example, different types of polymerization monomers are polymerized to form different types of primary particles to achieve different swelling degrees of the primary particles in the electrolyte.

In an embodiment of this application, the primary particles are formed by polymerization monomers; the polymerization monomers include at least one of butadiene, methyl acrylate, methyl methacrylate, styrene, butyl methacrylate, isooctyl acrylate, isobutyl acrylate, ethylene, propylene, or vinylidene fluoride; and a mass percentage y of the primary particles is 80% to 100% based on a mass of the porous coating. For example, the mass percentage y of the primary particles is 80%, 83%, 85%, 88%, 90%, 93%, 97%, 100%, or a range defined by any two of these values. Selecting the above types of polymerization monomers for polymerization to obtain the primary particles and adjusting the mass percentage of the primary particles to be within the above range helps to ensure the affinity between the porous coating of the separator and the electrolyte, making the porous coating have a suitable swelling degree and good air permeability, thereby improving the kinetic performance and cycling performance of the lithium-ion battery. A weight-average molecular weight of the primary particles is not particularly limited in this application, provided that the objective of this application can be achieved. For example, the weight-average molecular weight of the primary particles is 140,000 to 2,000,000.

In this application, the porous coating may further include a thickener and a wetting agent. A type and percentage of the thickener are not particularly limited in this application, provided that the objective of this application can be achieved. For example, the thickener includes but is not limited to at least one of sodium carboxymethyl cellulose, potassium carboxymethyl cellulose, nitrile rubber, or polyacrylic acid. A mass percentage of the thickener is 0% to 20% based on a mass of the porous coating. A type and percentage of the wetting agent are not particularly limited in this application, provided that the objective of this application can be achieved. For example, the wetting agent includes but is not limited to at least one of dimethylsiloxane, polyethylene oxide, ethylene oxide alkylphenol ether, polyoxyethylene aliphatic alcohol ether, polyoxyethylene polyoxypropylene block copolymer, or sodium dioctyl sulfosuccinate. A mass percentage of the wetting agent is 0% to 20% based on the mass of the porous coating.

A material of the base film is not particularly limited in this application, provided that the objective of this application can be achieved. For example, the base film may include but is not limited to at least one of polycarbonate (PC), polyethylene (PE), polypropylene (PP), or polyvinyl chloride (PVC). A thickness of the base film is not particularly limited in this application, provided that the objective of this application can be achieved. For example, the thickness of the base film is 3 µm to 20 µm.

A preparation method of separator is not particularly limited in this application, provided that the objective of this application can be achieved. For example, the preparation method of the separator includes but is not limited to the following steps: (1) mixing primary particles, a thickener, and a dispersant, adding a solvent, and well stirring the resulting mixture to obtain a porous coating slurry; (2) applying the porous coating slurry onto one surface of the base film, and performing drying to form a porous coating on one surface of the base film, thereby obtaining a separator with one surface coated with the porous coating; and (3) repeating the above steps on the other surface of the base film, and performing drying to form porous coatings on both surfaces of the base film, thereby obtaining a separator with both surfaces coated with the porous coatings. Thus, the separator is prepared. The solvent in the porous coating slurry is not particularly limited in this application, provided that the objective of this application can be achieved. For example, the solvent may be deionized water. The solid content of the porous coating slurry is not particularly limited in this application, provided that the objective of this application can be achieved. For example, the solid content of the porous coating slurry is 4w% to 80w%. A time and temperature for the drying are not particularly limited in this application, provided that the objective of this application can be achieved.

In an embodiment of this application, the electrolyte includes a lithium salt; the lithium salt includes at least one of lithium bis(fluorosulfonyl)imide, lithium bis(trifluoromethanesulfonyl)imide, lithium hexafluorophosphate, lithium tetrafluoroborate, lithium dioxalate borate, lithium bis(fluoromalonato)borate, or lithium trifluoromethyl sulfonate; and a mass percentage c of the lithium salt is 10% to 40% based on the mass of the electrolyte, preferably 12% to 35%. For example, the mass percentage c of the lithium salt is 10%, 12%, 14%, 20%, 26%, 30%, 35%, 37%, 40%, or a range defined by any two of these values. Selecting the above types of lithium salts and adjusting the mass percentage c of the lithium salt to be within the above ranges allows for a high solubility of the lithium salt, provides conductive ions and also facilitates formation of a stable SEI film on a surface of the negative electrode plate. Thus, the secondary battery has good cycling performance.

In an embodiment of this application, the electrolyte further includes a compound C; the compound C includes at least one of difluoropyridine, fluoroethylene carbonate, vinylene carbonate, triphenyl phosphate, lithium difluorophosphate, succinonitrile, adiponitrile, 1,3,6-hexanetricarbonitrile, ethylene sulfate, propylene sulfate, or butylene sulfate; and a mass percentage d of the compound C is 0.1% to 10% based on the mass of the electrolyte, preferably 1% to 8%. For example, the mass percentage d of the compound C is 0.1%, 0.7%, 1%, 1.4%, 2%, 2.5%, 3%, 3.6%, 4%, 4.4%, 5%, 5.7%, 6%, 6.5%, 7%, 7.4%, 8%, 9%, 10%, or a range defined by any two of these values. Selecting the above types of compounds C and adjusting the mass percentage d of the compound C to be within the above ranges facilitates formation of a more stable SEI film on the surface of the negative electrode, reduces a consumption rate of the electrolyte, and improves the kinetic performance of the secondary battery, thereby ensuring that the secondary battery has good low-temperature lithium precipitation performance and cycling performance.

In an embodiment of this application, the electrolyte further includes a compound C, and the compound C includes at least one of difluoropyridine, fluoroethylene carbonate, vinylene carbonate, triphenyl phosphate, or lithium difluorophosphate. Selecting the above types of compounds C with high electrochemical stability facilitates formation of a thinner and more uniform SEI film. The formed SEI film has high ionic conductivity, which facilitates desolvation of lithium ions and also can accelerate the transport of lithium ions in the SEI film, thereby improving the kinetic performance of the secondary battery. Thus, the secondary battery has good low-temperature lithium precipitation performance.

In an embodiment of this application, the electrolyte further includes a compound C, and the compound C includes at least one of succinonitrile, adiponitrile, or 1,3,6-hexanetricarbonitrile. Selecting the above types of compounds C helps to improve the high-voltage performance and high-temperature performance of the battery and broadens the electrochemical stability window of the electrolyte, thereby improving the cycling performance of the secondary battery.

In an embodiment of this application, the electrolyte further includes a compound C, and the compound C includes at least one of ethylene sulfate, propylene sulfate, or butylene sulfate. Selecting the above types of compounds C helps to reduce swelling of the secondary battery, improves the charge/discharge performance of the secondary battery, and increases the number of cycles of the secondary battery, thereby improving the cycling performance of the secondary battery.

In an embodiment of this application, the electrolyte may include a compound A, a compound B, and a lithium salt. In another embodiment of this application, the electrolyte may include a compound A, a compound C, and a lithium salt. In still another embodiment of this application, the electrolyte may include a compound A, a compound B, a compound C, and a lithium salt. Secondary batteries including the above electrolytes all have good low-temperature lithium precipitation performance.

In an embodiment of this application, the electrolyte in this application further includes a non-aqueous solvent. The non-aqueous solvent is not particularly limited in this application, provided that the objective of this application can be achieved. For example, the non-aqueous solvent may include but is not limited to at least one of 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, dibutyl ether, tetraglyme, diglyme, 1,2-dimethoxyethane, 1,2-diethoxyethane, 1-ethoxy-1-methoxyethane, 2-methyltetrahydrofuran, tetrahydrofuran, dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. A mass percentage e of the non-aqueous solvent is not particularly limited in this application, provided that the objective of this application can be achieved. For example, the mass percentage e of the non-aqueous solvent is 0% to 70% based on the mass of the electrolyte.

In an embodiment of this application, the electrolyte may include a compound A, a lithium salt, and a non-aqueous solvent, where mass percentages of the compound A and the lithium salt are as described above, and a mass percentage e of the non-aqueous solvent is 0% to 70%. The secondary battery including the above electrolyte has good low-temperature lithium precipitation performance.

In an embodiment of this application, the electrolyte may include a compound A, a compound B, a lithium salt, and a non-aqueous solvent, where mass percentages of the compound A, the compound B, and the lithium salt are as described above, and a mass percentage e of the non-aqueous solvent is 0% to 61%. The secondary battery including the above electrolyte has good low-temperature lithium precipitation performance.

In an embodiment of this application, the electrolyte may include a compound A, a compound C, a lithium salt, and a non-aqueous solvent, where mass percentages of the compound A, the compound C, and the lithium salt are as described above, and a mass percentage e of the non-aqueous solvent is 0% to 70%. The secondary battery including the above electrolyte has good low-temperature lithium precipitation performance.

In an embodiment of this application, the electrolyte may include a compound A, a compound B, a compound C, a lithium salt, and a non-aqueous solvent, where mass percentages of the compound A, the compound B, the compound C, and the lithium salt are as described above, and a mass percentage e of the non-aqueous solvent is 0% to 61%. The secondary battery including the above electrolyte has good low-temperature lithium precipitation performance.

In this application, the positive electrode includes a positive electrode plate. The positive electrode plate is not particularly limited in this application, provided that the objective of this application can be achieved. For example, the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one surface of the positive electrode current collector in its thickness direction or on two surfaces of the positive electrode current collector in its thickness direction. It should be noted that the "surface" herein may be an entire region of the surface of the positive electrode current collector or a partial region of the surface of the positive electrode current collector. This is not particularly limited in this application, provided that the objective of this application can be achieved. The positive electrode current collector is not particularly limited in this application, provided that the objective of this application can be achieved. For example, the positive electrode current collector may be an aluminum foil, an aluminum alloy foil, a composite current collector (for example, an aluminum-carbon composite current collector), or the like. The positive electrode material layer in this application includes a positive electrode active material. A type of the positive electrode active material is not particularly limited in this application, provided that the objective of this application can be achieved. For example, the positive electrode active material may include at least one of lithium nickel cobalt manganate (NCM811, NCM622, NCM523, NCM111), lithium nickel cobalt aluminate, lithium iron phosphate, lithium-rich manganese-based material, lithium cobalt oxide (LiCoO₂), lithium manganate, lithium iron manganese phosphate, lithium titanate, or the like. In this application, the positive electrode active material may further include a non-metal element. For example, the non-metal element includes at least one of fluorine, phosphorus, boron, chlorine, silicon, or sulfur. Thicknesses of the positive electrode current collector and the positive electrode material layer are not particularly limited in this application, provided that the objective of this application can be achieved. For example, the thickness of the positive electrode current collector is 5 µm to 20 µm, preferably 6 µm to 18 µm; and the thickness of the positive electrode material layer on one surface is 30 µm to 120 µm. In this application, the positive electrode material layer may further include a conductive agent and a positive electrode binder. A type of the conductive agent in the positive electrode material layer is not particularly limited in this application, provided that the objective of this application can be achieved. For example, the conductive agent may include but is not limited to at least one of conductive carbon black (Super P), carbon nanotubes (CNTs), carbon fiber, flake graphite, Ketjen black, graphene, a metal material, or a conductive polymer. The carbon nanotubes may include but are not limited to single-walled carbon nanotubes and/or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole. A type of the positive electrode binder in the positive electrode material layer is not particularly limited in this application, provided that the objective of this application can be achieved. For example, the positive electrode binder may include but is not limited to at least one of polyvinylidene fluoride, a vinylidene fluoride-hexafluoropropylene copolymer, polyamide, polyacrylonitrile, polyacrylic ester, polyacrylic acid, polyacrylate, polyvinylpyrrolidone, polyvinyl ether, polymethyl methacrylate, polytetrafluoroethylene, or polyhexafluoropropylene. A mass ratio of the positive electrode active material, the conductive agent, and the positive electrode binder in the positive electrode material layer is not particularly limited in this application, and persons skilled in the art can choose based on actual needs, provided that the objective of this application can be achieved.

In this application, the negative electrode includes a negative electrode plate. The negative electrode plate is not particularly limited in this application, provided that the objective of this application can be achieved. For example, the negative electrode plate includes a negative electrode current collector and a negative electrode material layer disposed on at least one surface of the negative electrode current collector. The "negative electrode material layer disposed on at least one surface of the negative electrode current collector" means that the negative electrode material layer may be disposed on one surface of the negative electrode current collector in its thickness direction or on two surfaces of the negative electrode current collector in its thickness direction. It should be noted that the "surface" herein may be an entire region of the surface of the negative electrode current collector or a partial region of the surface of the negative electrode current collector. This is not particularly limited in this application, provided that the objective of this application can be achieved. The negative electrode current collector is not particularly limited in this application, provided that the objective of this application can be achieved. For example, the negative electrode current collector may be a copper foil, a copper alloy foil, a nickel foil, a stainless steel foil, a titanium foil, foamed nickel, foamed copper, a composite current collector (for example, a lithium-copper composite current collector, a carbon-copper composite current collector, a nickel-copper composite current collector, or a titanium-copper composite current collector), or the like. The negative electrode material layer in this application includes a negative electrode active material. A type of the negative electrode active material is not particularly limited in this application, provided that the objective of this application can be achieved. For example, the negative electrode active material may include at least one of natural graphite, artificial graphite, mesocarbon microbead (MCMB), hard carbon, soft carbon, silicon, silicon-carbon composite, SiOₓ (0<x<2), Li-Sn alloy, Li-Sn-O alloy, Sn, SnO, SnO₂, spinel-structure lithium titanate Li₄Ti₅O₁₂, Li-Al alloy, or lithium metal. Thicknesses of the negative electrode current collector and the negative electrode material layer are not particularly limited in this application, provided that the objective of this application can be achieved. For example, the thickness of the negative electrode current collector is 4 µm to 20 µm, and the thickness of the negative electrode material layer is 20 µm to 130 µm. Optionally, the negative electrode material layer may further include a conductive agent and a negative electrode binder. A type of the conductive agent in the negative electrode material layer is not particularly limited in this application, provided that the objective of this application can be achieved. For example, the type of the conductive agent may be the same as the type of the conductive agent in the positive electrode material layer. A type of the negative electrode binder in the negative electrode material layer is not particularly limited in this application, provided that the objective of this application can be achieved. For example, the type of the negative electrode binder may be the same as the type of the positive electrode binder in the positive electrode material layer. A mass ratio of the negative electrode active material, the conductive agent, and the negative electrode binder in the negative electrode material layer is not particularly limited in this application, provided that the objective of this application can be achieved.

The secondary battery in this application further includes a packaging bag for accommodating the positive electrode plate, the negative electrode plate, the separator, the electrolyte, and other known components of the secondary battery in the art. The other components are not limited in this application. The packaging bag is not particularly limited in this application and may be any well-known packaging bag in the art, provided that the objective of this application can be achieved.

The secondary battery in this application is not particularly limited, and may include any apparatus in which electrochemical reactions take place. In an embodiment of this application, the secondary battery may include but is not limited to a lithium-ion secondary battery (lithium-ion battery), a lithium polymer secondary battery, or a lithium-ion polymer secondary battery.

A preparation method of secondary battery is not particularly limited in this application, and a well-known preparation method in the art can be used, provided that the objective of this application can be achieved. For example, the preparation method of secondary battery includes but is not limited to the following steps: stacking a positive electrode plate, a separator, and a negative electrode plate in sequence, performing operations such as winding and folding as required to obtain an electrode assembly of a wound structure, placing the electrode assembly into a packaging bag, injecting an electrolyte into the packaging bag, and sealing the packaging bag to obtain a secondary battery; or stacking a positive electrode plate, a separator, and a negative electrode plate in sequence, fixing four corners of the overall stacked structure to obtain an electrode assembly of a stacked structure, placing the electrode assembly into a packaging bag, injecting an electrolyte into the packaging bag, and sealing the packaging bag to obtain a secondary battery.

According to a second aspect, this application provides an electronic apparatus including the secondary battery according to any one of the foregoing embodiments. The secondary battery provided in this application has good low-temperature lithium precipitation performance. Therefore, the electronic apparatus of this application has long service life.

The electronic apparatus of this application is not particularly limited and may be any known electronic apparatus used in the prior art. For example, the electronic apparatus may include but is not limited to a notebook computer, a pen-input computer, a mobile computer, an e-book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a storage card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

### Examples

The following describes some embodiments of this application more specifically by using examples and comparative examples. Various tests and evaluations were performed according to the following methods.

### Test method and device:

### Contact angle test

A contact angle measuring instrument (CA200, Guangdong Beidou Precision Instrument Co., Ltd.) was used to test a contact angle of the separator; the to-be-tested separator was placed at a middle position of a sample table; a position of an injection needle tube forming a droplet was adjusted so that the tip of the injection needle tube faced the middle position of the sample table; and a height of the sample table was also adjusted so that a vertical height between the tip of the injection needle tube and a horizontal plane of the sample table where the separator was placed was 20 cm. A test electrolyte was added into the injection needle tube; the test electrolyte formed a droplet with a volume of 0.02 mL at an end opening of the needle tube; then the 0.02 mL droplet was dropwise added onto a surface of the to-be-tested separator; and a corresponding icon on the instrument was clicked to automatically detect contour coordinates of the droplet and measure a contact angle between the test electrolyte and the surface of the porous coating of the separator. The test electrolyte included ethylene carbonate, diethyl carbonate, and lithium hexafluorophosphate. Based on a mass of the electrolyte, a mass percentage of the ethylene carbonate was 26.25%, a mass percentage of the diethyl carbonate was 61.25%, and a mass percentage of the lithium hexafluorophosphate was 12.5%.

### Swelling degree test:

### (1) Preparation of adhesive film

A porous coating slurry was poured into an adhesive film preparation mold; then the mold was placed in an oven and baked at 60°C for 12 hours; after baking, appearance and hardness of the adhesive film were observed; and if the adhesive film was not dried completely, baking was performed again at 60°C until the adhesive film was dried completely.

### (2) Swelling Test

The prepared adhesive film was cut by scissors to form small adhesive film strips, each of which had a weight of 2 g, where each adhesive film was made into 3 parallel samples.

The small adhesive film strips were separately weighed; initial weights were recorded as M1; the small adhesive film strips were placed into 200 mL vials; the samples were labeled with names; 100 mL test electrolyte was added to ensure that the adhesive film was completely immersed in the test electrolyte; the vials were sealed and baked in an oven at 60°C for 24 hours; the small adhesive film strips were taken out of the sealed vials and wiped with dust-free paper; and a weight M2 of each small adhesive film strip was recorded.

Swelling degree (%)=(M2-M1)/M1×100%, where an average value of the swelling degrees of the 3 parallel samples was taken as the ultimate swelling degree data.

The test electrolyte included ethylene carbonate, diethyl carbonate, and lithium hexafluorophosphate. Based on a mass of the electrolyte, a mass percentage of the ethylene carbonate was 26.25%, a mass percentage of the diethyl carbonate was 61.25%, and a mass percentage of the lithium hexafluorophosphate was 12.5%.

### Lithium precipitation performance test

A lithium-ion battery was placed in a dry environment at 0°C for 30 minutes, then charged to 4.45 V at a constant current of 1C, charged to a current of 0.05C at a constant voltage of 4.45 V, and then discharged to 3.0 V at a constant current of 0.5C. This was one cycle. After the cycle was repeated five times according to the above charge and discharge process, the lithium-ion battery was charged to 4.45 V at a constant current of 1C and then disassembled; and a lithium precipitation state of the surface of a negative electrode plate was observed, where a region with no lithium precipitation on the surface of the negative electrode plate was golden or black, while a region with lithium precipitation was silver-white.

A standard for determining the lithium precipitation of the lithium-ion battery was as follows: A lithium precipitation level of the lithium-ion battery was divided into 0 to 15 according to a size of a lithium precipitation area. The lithium precipitation level was 0 when the lithium precipitation area was 0%, was 1 when 0%<lithium precipitation area≤5%, was 2 when 5%<lithium precipitation area ≤ 8%, was 3 when 8%<lithium precipitation area≤10%, was 4 when 10%<lithium precipitation area≤15%, was 5 when 15%<lithium precipitation area≤20%, was 6 when 20%<lithium precipitation area≤25%, was 7 when 25%<lithium precipitation area≤30%, was 8 when 30%<lithium precipitation area≤35%, was 9 when 35%<lithium precipitation area≤40%, was 10 when 40%<lithium precipitation area≤50%, was 11 when 50%<lithium precipitation area≤55%, was 12 when 55%<lithium precipitation area≤60%, was 13 when 60%<lithium precipitation area≤65%, was 14 when 65%<lithium precipitation area≤70%, and was 15 when 70%<lithium precipitation area≤100%. A percentage of the lithium precipitation area was calculated based on a total area of the negative electrode material layer. An increase in the lithium precipitation area of the lithium-ion battery resulted in an increase in the lithium precipitation level, leading to degradation of the lithium precipitation performance of the lithium-ion battery. 0 represents no lithium precipitation in the lithium-ion battery, and 15 represents the most severe lithium precipitation in the lithium-ion battery.

### Example 1-1

### <Preparation of electrolyte>

In an argon atmosphere glove box with a moisture content < 10 ppm, a compound B diethyl carbonate and a lithium salt lithium bis(fluorosulfonyl)imide (LiFSI) were mixed at a mass ratio of 7:3 to obtain a base electrolyte, then a compound A represented by the formula (I-8) was added into the base electrolyte, and the resulting mixture was well stirred to obtain an electrolyte. Based on a mass of the electrolyte, a mass percentage a of the compound A was 20%, a mass percentage b of the compound B was 56%, and a mass percentage c of the lithium salt was 24%.

### <Preparation of separator>

Primary particles, a thickener sodium carboxymethyl cellulose, and a wetting agent dimethylsiloxane were mixed at a mass ratio of 95:0.5:4.5, added with deionized water, and well stirred in a vacuum stirrer to obtain a porous coating slurry with a viscosity of 40 mPa·s and a solid content of 5%. The porous coating slurry was uniformly applied onto one surface of a polyethylene porous substrate, and dried at 85°C in an oven for 4 hours to obtain a separator with one surface coated with the porous coating. The other surface of the polyethylene porous substrate was uniformly coated with the porous coating slurry, and dried at 85°C in the oven for 4 hours to obtain a separator with two surfaces coated with the porous coatings. Styrene was used as a polymerization monomer for the primary particles, a weight-average molecular weight of the primary particles was 150,000, and a coating weight x of the porous coating was 0.2 mg/mm².

### <Preparation of positive electrode plate>

A positive electrode active material LiCoO₂, a positive electrode binder polyvinylidene fluoride (PVDF), and a conductive agent conductive carbon black were mixed at a mass ratio of 96:2:2, N-methylpyrrolidone (NMP) was added, and the resulting mixture was well stirred in a vacuum stirrer to obtain a positive electrode slurry with a solid content of 70wt%. The positive electrode slurry was uniformly applied onto one surface of a 14 µm thick positive electrode current collector aluminum foil, and baked at 120°C for 1 hour to obtain a positive electrode plate with one surface coated with a positive electrode material layer with a thickness of 110 µm. The above steps were repeated on the other surface of the positive electrode current collector aluminum foil to obtain a positive electrode plate with two surfaces coated with the positive electrode material layers. Then, drying was performed in vacuum at 120°C for 1 hour, followed by cold pressing, cutting, and slitting, to obtain a positive electrode plate with a specification of 74 mm×867 mm. A compacted density of the positive electrode material layer was 4.15 g/cm³.

### <Preparation of negative electrode plate>

A negative electrode active material artificial graphite, sodium carboxymethyl cellulose (CMC), and a negative electrode binder styrene-butadiene rubber were mixed at a mass ratio of 85:2:13, added with deionized water, and well stirred in a vacuum stirrer to obtain a negative electrode slurry with a solid content of 65wt%. The negative electrode slurry was uniformly applied onto one surface of a 12 µm thick negative electrode current collector copper foil, and baked at 120°C for 1 hour to obtain a negative electrode plate with one surface coated with a negative electrode material layer with a thickness of 100 µm. The foregoing steps were repeated on the other surface of the negative electrode current collector copper foil to obtain a negative electrode plate with two surfaces coated with the negative electrode material layers. Then, drying was performed in vacuum at 120°C for 1 hour, followed by cold pressing, cutting, and slitting, to obtain a negative electrode plate with a specification of 76 mm×875 mm. A compacted density of the negative electrode material layer was 1.6 g/cm³.

### <Preparation of lithium-ion battery>

The separator, the positive electrode plate, the separator, and the negative electrode plate were sequentially stacked in an order so that the separator was located between the positive electrode plate and the negative electrode plate to separate the positive electrode plate from the negative electrode plate, and then the resulting stack was wound, where a positive electrode tab was connected to the positive electrode plate, and a negative electrode tab was connected to the negative electrode plate, to obtain an electrode assembly. The electrode assembly was packaged into an aluminum foil packaging bag; the positive electrode tab and the negative electrode tab were led into an external space of the packaging bag from an internal space of the packaging bag; baking was performed at 80°C for 12 hours to remove moisture; and then an electrolyte was injected, followed by processes such as vacuum packaging, standing, formation, and shaping, to obtain a lithium-ion battery.

### Examples 1-2 to 1-8

These examples were the same as Example 1-1 except that the related parameters were adjusted according to Table 1. When the mass percentage a of the compound A changed, the mass percentage b of the compound B and the mass percentage c of the lithium salt changed accordingly, and the mass ratio of the compound B to the lithium salt remained unchanged.

### Examples 1-9 to 1-14

These examples were the same as Example 1-1 except that the related parameters were adjusted according to Table 1. When the coating weight x of the porous coating changed, a coating amount of the porous coating slurry was adjusted to make sure that the coating weight x of the porous coating was as shown in Table 1.

### Examples 1-15 to 1-16

These examples were the same as Example 1-1 except that the related parameters were adjusted according to Table 1. When the mass percentage y of the primary particles changed, the mass percentages of the thickener and the wetting agent changed accordingly, and the mass ratio of the thickener to the wetting agent remained unchanged.

### Examples 1-17 to 1-22

These examples were the same as Example 1-1 except that the related parameters were adjusted according to Table 1. Weight-average molecular weights of the primary particles in Examples 1-17 to 1-20 were sequentially 340,000, 450,000, 760,000, and 470,000.

### Example 2-1

This example was the same as Example 1-1 except that the related parameters were adjusted according to Table 2. When the mass percentage b of the compound B and the mass percentage c of the lithium salt changed, the mass percentage a of the compound A changed accordingly.

### Example 2-2

This example was the same as Example 2-1 except that the following steps were performed for <preparation of electrolyte> and the related preparation parameters were adjusted according to Table 1.

### <Preparation of electrolyte>

In an argon atmosphere glove box with a moisture content < 10 ppm, a compound A presented by the formula (I-8), a compound B diethyl carbonate, and a non-aqueous solvent sulfolane were mixed to obtain a base solvent, then a lithium salt lithium bis(fluorosulfonyl)imide was added into the base solvent, and the resulting mixture was well stirred to obtain an electrolyte. Based on a mass of the electrolyte, a mass percentage a of the compound A was 20%, a mass percentage b of the compound B diethyl carbonate was 30%, a mass percentage c of the lithium salt was 30%, and the remainder was the non-aqueous solvent.

### Examples 2-3 to 2-7

These examples were the same as Example 2-2 except that the related parameters were adjusted according to Table 2. When the mass percentage b of the compound B and the mass percentage c of the lithium salt changed, the mass percentage of the non-aqueous solvent sulfolane changed accordingly, and the mass percentage a of the compound A remained unchanged.

### Examples 2-8 to 2-9

These examples were the same as Example 2-1 except that the related parameters were adjusted according to Table 2.

### Examples 2-10 to 2-11

These examples were the same as Example 2-2 except that the related parameters were adjusted according to Table 2. When the mass percentage b of the compound B and the mass percentage c of the lithium salt changed, the mass percentage of the non-aqueous solvent sulfolane changed accordingly, and the mass percentage a of the compound A remained unchanged.

### Examples 3-1 to 3-12

These examples were the same as Example 2-3 except that the related parameters were adjusted according to Table 3. When the mass percentage d of the compound C changed, the mass percentage of the non-aqueous solvent sulfolane changed accordingly, and the mass percentage a of the compound A, the mass percentage b of the compound B, and the mass percentage c of the lithium salt remained unchanged.

### Comparative example 1

This example was the same as Example 1-1 except that the following steps were performed for <preparation of electrolyte> and the related preparation parameters were adjusted according to Table 1.

### <Preparation of electrolyte>

In an argon atmosphere glove box with a moisture content < 10 ppm, a compound B diethyl carbonate and a lithium salt lithium bis(fluorosulfonyl)imide (LiFSI) were mixed at a mass ratio of 70:30 to obtain an electrolyte.

### Comparative example 2 to Comparative example 4

These examples were the same as Example 1-1 except that the related parameters were adjusted according to Table 1. When the mass percentage a of the compound A changed, the mass percentage b of the compound B and the mass percentage c of the lithium salt changed accordingly, and the mass ratio of the compound B to the lithium salt remained unchanged. When the coating weight x of the porous coating changed, the coating amount of the porous coating slurry was adjusted so that the coating weight x of the porous coating was as shown in Table 1.

The preparation parameters and performance parameters of the examples and comparative examples are shown in Table 1 and Table 3.

**Table 1**

| | Compound A | a (%) | Primary particle monomer | y (%) | Swelling degree (%) | x (mg/mm2) | Contact angle (°) | Lithium precipitation level |
|---|---|---|---|---|---|---|---|---|
| Example 1-1 | Compound I-8 | 20 | Styrene | 95 | 79 | 0.2 | 36 | 10 |
| Example 1-2 | Compound I-8 | 30 | Styrene | 95 | 79 | 0.2 | 36 | 8 |
| Example 1-3 | Compound I-8 | 35 | Styrene | 95 | 79 | 0.2 | 36 | 6 |
| Example 1-4 | Compound I-8 | 50 | Styrene | 95 | 79 | 0.2 | 36 | 6 |
| Example 1-5 | Compound I-8 | 65 | Styrene | 95 | 79 | 0.2 | 36 | 6 |
| Example 1-6 | Compound I-8 | 70 | Styrene | 95 | 79 | 0.2 | 36 | 7 |
| Example 1-7 | Compound I-8 | 75 | Styrene | 95 | 79 | 0.2 | 36 | 7 |
| Example 1-8 | Compound I-8 | 82 | Styrene | 95 | 79 | 0.2 | 36 | 9 |
| Example 1-9 | Compound I-8 | 20 | Styrene | 95 | 79 | 0.5 | 35 | 9 |
| Example 1-10 | Compound I-8 | 20 | Styrene | 95 | 79 | 1 | 33 | 8 |
| Example 1-11 | Compound I-8 | 20 | Styrene | 95 | 79 | 3 | 31 | 7 |
| Example 1-12 | Compound I-8 | 20 | Styrene | 95 | 79 | 5 | 28 | 7 |
| Example 1-13 | Compound I-8 | 20 | Styrene | 95 | 79 | 6 | 27 | 6 |
| Example 1-14 | Compound I-8 | 20 | Styrene | 95 | 79 | 7 | 27 | 10 |
| Example 1-15 | Compound I-8 | 20 | Styrene | 80 | 79 | 0.2 | 33 | 8 |
| Example 1-16 | Compound I-8 | 20 | Styrene | 100 | 79 | 0.2 | 38 | 9 |
| Example 1-17 | Compound 1-1 + compound I-8 (mass ratio: 1:1) | 40 | 80% of styrene + 20% of isobutyl acrylate | 95 | 85 | 1 | 31 | 8 |
| Example 1-18 | Compound 1-1 + compound I-5 (mass ratio: 1:4) | 50 | 80% of styrene + 20% of isobutyl acrylate | 95 | 85 | 1 | 28 | 7 |
| Example 1-19 | Compound I-3 + compound I-9 (mass ratio: 3:1) | 40 | 30% of butadiene + 70% of vinylidene fluoride | 95 | 59 | 1 | 29 | 7 |
| Example 1-20 | Compound I-6 + compound I-8 (mass ratio: 1:1) | 60 | 30% of methyl methacrylate +10% of ethylene + 60% of propylene | 95 | 90 | 1 | 32 | 8 |
| Example 1-21 | Compound I-4 | 70 | Methyl methacrylate | 85 | 51 | 3 | 15 | 6 |
| Example 1-22 | Compound I-4 | 65 | Isobutyl acrylate | 85 | 62 | 3 | 3 | 5 |
| Comparative example 1 | / | / | Styrene | | 79 | 0.1 | 45 | 15 |
| Comparative example 2 | Compound I-8 | 15 | Styrene | | 79 | 0.2 | 36 | 14 |
| Comparative example 3 | Compound I-8 | 20 | Styrene | | 79 | 0.1 | 45 | 14 |
| Comparative example 4 | Compound I-8 | 85 | Styrene | | 79 | 0.2 | 36 | 14 |

| | | | | | | | | |
|---|---|---|---|---|---|---|---|---|
| Note: "/" in Table 1 means that a related preparation parameter does not exist. In Example 1-17, 80% of styrene + 20% of isobutyl acrylate means that based on a mass of the primary particles, a mass percentage of the styrene is 80%, and a mass percentage of the isobutyl acrylate is 20%. Other examples and comparative examples are understood similarly. | | | | | | | | |

From Examples 1-1 to 1-22 and Comparative examples 1 to 4, it can be seen that the compound A is added into the electrolyte, the mass percentage a of the compound A is adjusted to be within the range in this application, and the contact angle between the electrolyte and the surface of the porous coating of the separator is adjusted to be within the range in this application, so that the contact angle between the electrolyte and the surface of the porous coating of the separator is smaller, and the lithium precipitation level of the lithium-ion battery is lower, indicating that the electrolyte has a better infiltration effect on the separator, and the lithium-ion battery of this application has good low-temperature lithium precipitation performance. From Examples 1-1 to 1-8 and Comparative example 1, it can be seen that when no compound A is added into the electrolyte, the contact angle between the electrolyte and the surface of the porous coating of the separator is larger, and the lithium precipitation level of the lithium-ion battery is higher, resulting in poor low-temperature lithium precipitation performance of the lithium-ion battery obtained. From Examples 1-1 to 1-8 and Comparative examples 2 to 4, it can be seen that when the mass percentage a of the compound A is not within the range in this application, even if the compound A is added into the electrolyte, the contact angle between the electrolyte and the surface of the porous coating of the separator is larger, and the lithium precipitation level of the lithium-ion battery is not effectively reduced as compared to Comparative example 1, resulting in poor low-temperature lithium precipitation performance of the lithium-ion battery obtained. This indicates that the lithium-ion batteries in these examples of this application have good low-temperature lithium precipitation performance.

The coating weight x of the porous coating usually affects the low-temperature lithium precipitation performance of the lithium-ion battery. From Example 1-1 and Examples 1-9 to 1-14, it can be seen that when the coating weight x of the porous coating is within the range in this application, the contact angle between the electrolyte and the surface of the porous coating of the separator is smaller, indicating that the electrolyte has a better infiltration effect on the separator, and the lithium precipitation level of the lithium-ion battery is lower. This indicates that the lithium-ion battery of this application has good low-temperature lithium precipitation performance.

The primary particles formed by polymerization of different types of polymerization monomers and the mass percentage y of the primary particles usually affect the low-temperature lithium precipitation performance of the lithium-ion battery. From Example 1-1 and Examples 1-15 to 1-20, it can be seen that when the type of the polymerization monomers of the primary particles and the mass percentage y of the primary particles are within the ranges in this application, the contact angle between the electrolyte and the surface of the porous coating of the separator is smaller, indicating that the electrolyte has a better infiltration effect on the separator, and the lithium precipitation level of the lithium-ion battery is lower. This indicates that the lithium-ion battery of this application has good low-temperature lithium precipitation performance.

**Table 2**

| | Compound B | b (%) | Lithium salt | c (%) | Lithium precipitatio n level |
|---|---|---|---|---|---|
| Example 1-1 | Diethyl carbonate | 56 | Lithium bis(fluorosulfonyl)imid e | 24 | 10 |
| Example 2-1 | Diethyl carbonate | 40 | Lithium bis(fluorosulfonyl)imid e | 40 | 7 |
| Example 2-2 | Diethyl carbonate | 30 | Lithium bis(fluorosulfonyl)imid e | 30 | 6 |
| Example 2-3 | Diethyl carbonate | 20 | Lithium bis(fluorosulfonyl)imid e | 20 | 5 |
| Example 2-4 | Diethyl carbonate | 15 | Lithium bis(fluorosulfonyl)imid e | 15 | 4 |
| Example 2-5 | Diethyl carbonate | 9 | Lithium bis(fluorosulfonyl)imid e | 9 | 9 |
| Example 2-6 | Diethyl carbonate | 8 | Lithium bis(fluorosulfonyl)imid e | 8 | 10 |
| Example 2-7 | Diethyl carbonate + ethylene carbonate (mass ratio: 1:1) | 40 | Lithium bis(trifluoromethanesulf onyl)imide + lithium bis(fluorosulfonyl)imid e (mass ratio: 1:1) | 40 | 8 |
| Example 2-8 | Ethyl acetate | 40 | Lithium bis(fluorosulfonyl)imid e | 40 | 5 |
| Example 2-9 | Diethyl carbonate + ethyl acetate (mass ratio: 1:1) | 40 | Lithium bis(fluorosulfonyl)imid e | 40 | 6 |
| Example 2-10 | Ethyl acetate | 20 | Lithium bis(fluorosulfonyl)imid e | 20 | 4 |
| Example 2-11 | Ethyl acetate | 9 | Lithium bis(fluorosulfonyl)imid e | 9 | 6 |

The type and mass percentage of the compound B usually affect the low-temperature lithium precipitation performance of the lithium-ion battery. From Example 1-1 and Examples 2-1 to 2-11, it can be seen that when the type and mass percentage of the compound B are within the ranges in this application, the lithium precipitation level of the lithium-ion battery is lower, indicating that the lithium-ion battery of this application has good low-temperature lithium precipitation performance.

The type and mass percentage of the lithium salt usually affect the low-temperature lithium precipitation performance of the lithium-ion battery. From Example 1-1 and Examples 2-1 to 2-7, it can be seen that when the type and mass percentage of the lithium salt are within the ranges in this application, the lithium precipitation level of the lithium-ion battery is lower, indicating that the lithium-ion battery of this application has good low-temperature lithium precipitation performance.

**Table 3**

| | Compound C | d (%) | Lithium precipitation level |
|---|---|---|---|
| Example 2-3 | / | / | 5 |
| Example 3-1 | Fluoroethylene carbonate | 0.05 | 5 |
| Example 3-2 | Fluoroethylene carbonate | 0.1 | 4 |
| Example 3-3 | Fluoroethylene carbonate | 1 | 0 |
| Example 3-4 | Fluoroethylene carbonate | 8 | 1 |
| Example 3-5 | Fluoroethylene carbonate | 10 | 3 |
| Example 3-6 | Fluoroethylene carbonate | 11 | 5 |
| Example 3-7 | Ethylene sulfate | 1 | 1 |
| Example 3-8 | Succinonitrile | 1 | 2 |
| Example 3-9 | Butylene sulfate | 1 | 2 |
| Example 3-10 | Fluoroethylene carbonate + ethylene sulfate (mass ratio: 1:1) | 2 | 2 |
| Example 3-11 | Ethylene sulfate + adiponitrile (mass ratio: 1:1) | 2 | 1 |
| Example 3-12 | Triphenyl phosphate + lithium difluorophosphate (mass ratio: 1:1) | 2 | 1 |

| | | | |
|---|---|---|---|
| Note: "/" in Table 3 means that a related preparation parameter does not exist. | | | |

The type and mass percentage of the compound C usually affect the low-temperature lithium precipitation performance of the lithium-ion battery. From Example 2-3 and Examples 3-1 to 3-12 that, when the type and mass percentage of the compound C are within the ranges in this application, the lithium precipitation level of the lithium-ion battery is lower, indicating that the lithium-ion battery of this application has good low-temperature lithium precipitation performance.

It should be noted that the terms "include", "comprise", or any other variations thereof are intended to cover a non-exclusive inclusion, so that a process, a method, or an item including a set of elements not only includes those elements but also includes other elements that are not expressly listed, or further includes elements inherent to such process, method, or item.

All embodiments in this specification are described in a related manner. For the same or similar parts of these embodiments, reference may be made between these embodiments. Each embodiment focuses on differences from other embodiments.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A secondary battery, comprising a positive electrode, a negative electrode, a separator, and an electrolyte; **characterized in that**, the electrolyte comprises a compound A represented by the following formula: 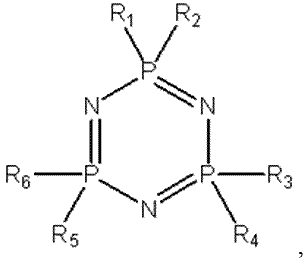
wherein R₁ to R₆ are each independently selected from a fluorine atom, a cyano group, a sulfo group, an aldehyde group, a substituted or unsubstituted C₁-C₆ alkoxy group, a substituted or unsubstituted C₁-C₆ alkyl group, a substituted or unsubstituted C₂-C₆ alkenyl group, a substituted or unsubstituted C₂-C₆ alkynyl group, a substituted or unsubstituted C₆-C₁₂ aryl group, or a substituted or unsubstituted C₆-C₁₂ aryloxy group;
during substitution, substituents of the groups are each independently selected from a fluorine atom, a C₁-C₃ alkyl group, or a C₂-C₄ alkenyl group;
a mass percentage a of the compound A is 20% to 82% based on a mass of the electrolyte; and
the separator comprises a base film and a porous coating provided on at least one surface of the base film, and a contact angle between the electrolyte and the surface of the porous coating of the separator is 0° to 36°.

2. The secondary battery according to claim 1, **characterized in that**, the mass percentage a of the compound A is 30% to 75% based on the mass of the electrolyte.

3. The secondary battery according to claim 1 or 2, **characterized in that**, the mass percentage a of the compound A is 35% to 65% based on the mass of the electrolyte.

4. The secondary battery according to any one of claims 1 to 3, **characterized in that**, the compound A is at least one selected from the following compounds:

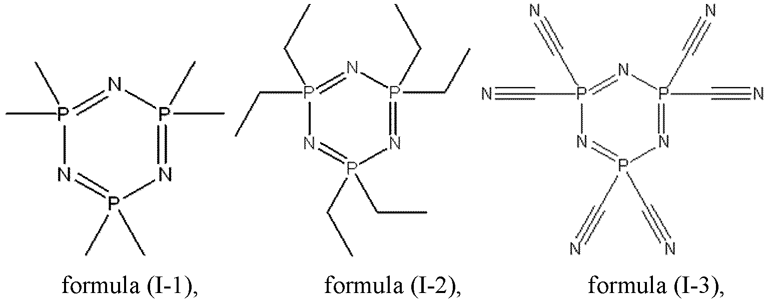

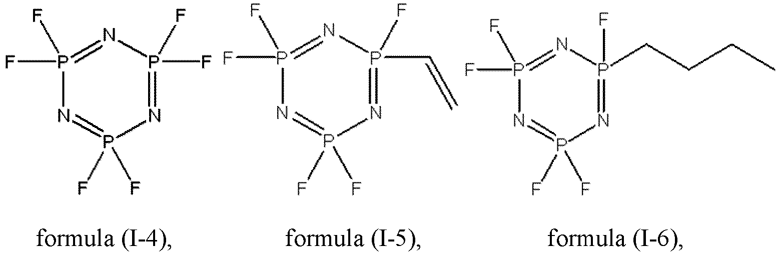

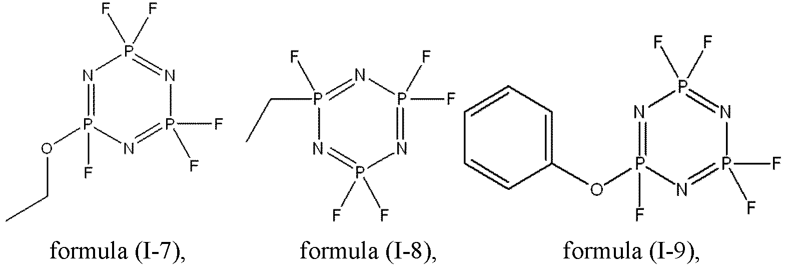

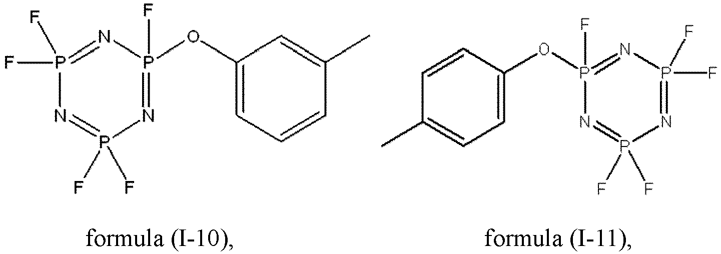

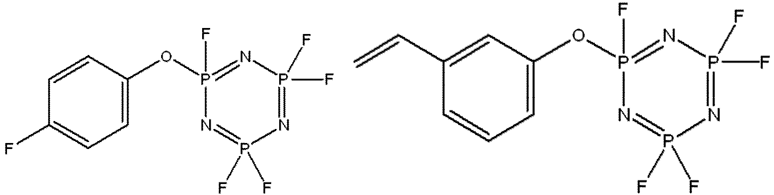

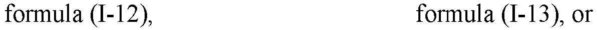

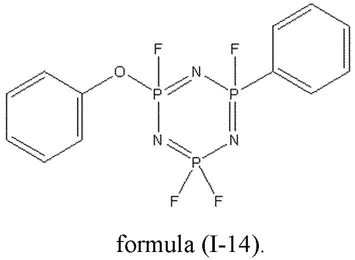

5. The secondary battery according to any one of claims 1 to 4, **characterized in that**, the electrolyte comprises a compound B; the compound B comprises at least one of a C₂-C₁₂ carboxylate or a C₃-C₉ carbonate; and a mass percentage b of the compound B is 9% to 40% based on the mass of the electrolyte.

6. The secondary battery according to claim 5, **characterized in that**, the secondary battery satisfies at least one of the following characteristics:
(1) the carboxylate comprises at least one of methyl formate, methyl acetate, ethyl acetate, n-propyl acetate, tert-butyl acetate, methyl propionate, ethyl propionate, propyl propionate, γ-butyrolactone, decalactone, valerolactone, caprolactone, difluoroethyl acetate, ethyl difluoroacetate, monofluoroethyl acetate, ethyl monofluoracetate, trifluoroethyl acetate, ethyl trifluoroacetate, difluoropropyl acetate, or propyl difluoroacetate; or
(2) the carbonate comprises at least one of dimethyl carbonate, diethyl carbonate, dipropyl carbonate, methyl propyl carbonate, ethyl propyl carbonate, methyl ethyl carbonate, ethylene carbonate, propylene carbonate, butylene carbonate, vinylene carbonate, methyl ethyl trifluoromethyl carbonate, or diethyl trifluoromethyl carbonate.

7. The secondary battery according to any one of claims 1 to 6, **characterized in that**, a coating weight x of the porous coating is 0.2 mg/5000mm² to 6 mg/5000mm².

8. The secondary battery according to any one of claims 1 to 7, **characterized in that**, the porous coating comprises primary particles, and a swelling degree of the primary particles in the electrolyte is 50% to 200%.

9. The secondary battery according to claim 8, **characterized in that**, the primary particles are formed by polymerization of monomers; the monomers comprise at least one of butadiene, methyl acrylate, methyl methacrylate, styrene, butyl methacrylate, isooctyl acrylate, isobutyl acrylate, ethylene, propylene, or vinylidene fluoride; and a mass percentage of the primary particles is 80% to 100% based on a mass of the porous coating.

10. The secondary battery according to any one of claims 1 to 9, **characterized in that**, the electrolyte comprises a lithium salt; the lithium salt comprises at least one of lithium bis(fluorosulfonyl)imide, lithium bis(trifluoromethanesulfonyl)imide, lithium hexafluorophosphate, lithium tetrafluoroborate, lithium dioxalate borate, lithium bis(fluoromalonato)borate, or lithium trifluoromethyl sulfonate; and a mass percentage c of the lithium salt is 10% to 40% based on the mass of the electrolyte.

11. The secondary battery according to claim 10, **characterized in that**, the mass percentage c of the lithium salt is 12% to 35% based on the mass of the electrolyte.

12. The secondary battery according to any one of claims 1 to 11, **characterized in that**, the electrolyte further comprises a compound C; the compound C comprises at least one of difluoropyridine, fluoroethylene carbonate, vinylene carbonate, triphenyl phosphate, lithium difluorophosphate, succinonitrile, adiponitrile, 1,3,6-hexanetricarbonitrile, ethylene sulfate, propylene sulfate, or butylene sulfate; and a mass percentage d of the compound C is 0.1% to 10% based on the mass of the electrolyte.

13. The secondary battery according to claim 12, **characterized in that**, the mass percentage d of the compound C is 1% to 8% based on the mass of the electrolyte.

14. An electronic apparatus, comprising the secondary battery according to any one of claims 1 to 13.
